# FASCICULE DE BREVET EUROPEEN

(11) **EP 2 834 172 B1**
(45) Date de publication et mention de la délivrance du brevet: **15.03.2017**
(21) Numéro de dépôt: 13713906.9
(22) Date de dépôt: 03.04.2013
(51) Int. Cl.: B65G 1/137

(54) **SYSTEME ET PROCEDE DE TRAITEMENT D'UNE COMMANDE, UTILISATION D'UN PRODUIT PROGRAMME D'ORDINATEUR ET D'UN MEDIUM DE STOCKAGE DANS UN TEL SYSTEME**
SYSTEM UND VERFAHREN ZUR VERARBEITUNG EINES ANTRAGS, VERWENDUNG EINES COMPUTERPROGRAMMPRODUKTS ODER EINES SPEICHERMEDIUMS IN SOLCH EINEM SYSTEM
SYSTEM AND METHOD FOR PROCESSING A COMMAND, USE OF A COMPUTER PROGRAM PRODUCT AND OF A STORAGE MEDIUM IN SUCH A SYSTEM

(30) Priorité: 04.04.2012 FR 1253119
(43) Date de publication de la demande: 11.02.2015
(73) Titulaire: Savoye, 21000 Dijon (FR)
(72) Inventeur: VALENTIN, Fabrice, F-51470 Saint Memmie (FR)
(74) Mandataire: Vidon Brevets & Stratégie
(86) Numéro de dépôt international: PCT/EP2013/057049
(87) Numéro de publication internationale: WO 2013/150080

(56) Documents cités:
- EP-A1- 1 681 247
- EP-A2- 1 964 792
- DE-U1-202006 005 115

## Description

### 1. DOMAINE DE L'INVENTION

Le domaine de l'invention est celui de la logistique, et en particulier celui des systèmes de distribution automatisé, notamment, mais non exclusivement, pour la préparation de colis.

Plus précisément, l'invention concerne une technique de traitement d'une commande par un système de pilotage d'un système de distribution automatisé. On suppose que le système de distribution automatisé comprend des sources, stockant des charges, et au moins une destination, recevant des charges.

Le système de pilotage (aussi appelé SGE, pour «Système de Gestion d'Entrepôt », ou WCS, pour « Warehouse Control System » en anglais) est un système informatique de gestion central, ayant en charge le pilotage de l'ensemble du système de distribution automatisé, ainsi que la gestion des commandes.

Dans la présente description, on utilise les définitions suivantes :
- une commande est une liste de charges devant être extraites des sources et fournies dans un ordre donné à une destination donnée ;
- le traitement d'une commande donnée (on parle également de gestion d'une commande donnée) regroupe toutes les actions menées par le système de pilotage pour piloter le système de distribution automatisé (y compris les sources) afin que toutes les charges listées dans cette commande donnée arrivent à la destination souhaitée dans l'ordre souhaité.

Par ailleurs, par « traitement simultané de plusieurs commandes », on entend le fait que le système de pilotage n'attend pas qu'une commande soit entièrement traitée (c'est-à-dire que toutes les charges listées dans cette commande soient arrivées à la destination souhaitée dans l'ordre souhaité) pour effectuer (ou au moins commencer à effectuer) le traitement d'une autre commande.

Dans la suite de la description, on distingue deux types de traitement simultané d'une pluralité de commandes :
- un premier type de traitement simultané correspond au cas où, parmi la pluralité de commandes traitées simultanément par le système de pilotage, chaque commande est destinée à une destination distincte. Dans ce cas, le système de pilotage n'attend pas qu'une première commande destinée à une première destination soit entièrement traitée (c'est-à-dire que toutes les charges listées dans cette première commande soient arrivées à la première destination souhaitée dans l'ordre souhaité) pour effectuer (ou au moins commencer à effectuer) le traitement d'une deuxième commande destinée à une deuxième destination ;
- un second type de traitement simultané correspond au cas où, parmi la pluralité de commandes traitées simultanément par le système de pilotage, toutes sont destinées à une même destination. Dans ce cas, le système de pilotage n'attend pas qu'une première commande destinée à cette destination soit entièrement traitée (c'est-à-dire que toutes les charges listées dans cette première commande soient arrivées à cette destination dans l'ordre souhaité) pour effectuer (ou au moins commencer à effectuer) le traitement d'une deuxième commande destinée à cette même destination. On notera qu'à l'issue du traitement des première et deuxième commandes, la destination ne reçoit pas simultanément les charges de ces deux commandes, mais reçoit d'abord les charges listées dans la première commande (dans l'ordre souhaité) puis reçoit les charges listées dans la deuxième commande (dans l'ordre souhaité).

En pratique, ces deux types de traitement simultané peuvent être combinés : parmi la pluralité de commandes traitées simultanément par le système de pilotage, au moins deux commandes sont destinées à des destinations distinctes, et au moins deux commandes sont destinées à une même destination.

L'invention s'applique notamment, mais non exclusivement, dans le cas où chaque source du système de distribution automatisé est une partie d'un magasin de stockage (cette partie est aussi appelée « ensemble de rangement » dans la suite de la description) et chaque destination du système de distribution automatisé est un poste de préparation de commande (aussi appelé « poste de picking »).

Il est clair cependant que de nombreuses variantes peuvent être envisagées sans sortir du cadre de la présente invention : par exemple, chaque source peut être définie comme un magasin de stockage, voire comme un ensemble comprenant plusieurs magasins de stockage, ou encore comme un dispositif de stockage (moins complexe qu'un magasin).

### 2. ARRIÈRE-PLAN TECHNOLOGIQUE

On s'attache plus particulièrement dans la suite de ce document à décrire la problématique existant dans le cas particulier où le système de distribution automatisé est utilisé pour la préparation de colis. L'invention ne se limite bien sûr pas à cette application particulière, mais présente un intérêt pour toute technique de traitement d'une commande par un système de pilotage d'un système de distribution automatisé, devant faire face à une problématique proche ou similaire.

Les systèmes de préparation de colis sont plus particulièrement utilisés dans les entreprises d'expédition et de vente à distance de produits de petit volume. Les principaux exemples d'utilisateurs de ces systèmes automatisés de préparation de colis sont les fournisseurs de matériels de bureau, de vêtements, de produits cosmétiques, d'outillages ou de pièces détachées dans l'industrie mécanique. Ces systèmes permettent de préparer avec un minimum de main-d'oeuvre, dans un délai court et avec un suivi précis des stocks, un colis correspondant à une commande précise d'un client, cette commande portant sur plusieurs produits en différentes quantités, chacun des produits avec sa quantité étant identifié par une ligne de la commande (chaque ligne de la commande défini donc un contenant de stockage dans lequel se trouve le produit souhaité).

Un exemple d'un tel système automatisé de préparation de colis est décrit notamment dans le brevet FR 2 915 979 déposé par la demanderesse. Il comprend par exemple :
- un magasin de stockage automatisé renfermant les produits dans des contenants de stockage (correspondant aux charges précitées), chaque contenant de stockage étant associé à une référence unique de produit (ce peut être aussi des contenants renfermant une commande spécifique ou un mélange de produits) ;
- un poste de préparation de commande, où les produits sont prélevés et placés par un opérateur dans un colis (contenant d'expédition) ;
- un ensemble de convoyeurs amenant les contenants de stockage, dans lesquels se trouvent les produits, du magasin de stockage au poste de préparation de commande ou d'expédition et réciproquement ; et
- un système de pilotage (WCS).

Le magasin de stockage automatisé comprend par exemple quatre ensembles de rangement, chaque ensemble de rangement étant formé d'une allée desservant de part et d'autre une étagère de stockage (ou rayonnage) à plusieurs niveaux de rangements superposés, chaque étagère étant subdivisée sur sa longueur en emplacements de stockage (également appelés cellules) destinés à accueillir chacune un contenant de stockage. Chaque allée reçoit, à chaque niveau de rangement, des voies pour le déplacement d'un dispositif de transfert (également appelé chariot de collecte et de transport ou navette) qui assure le déplacement des contenants de stockage, pour leur mise en place à l'intérieur des emplacements de stockage et pour leur prélèvement depuis ces emplacements. Une voie est généralement formée de deux rails parallèles et le chariot est équipé de roues pour se déplacer sur ces rails. Les chariots peuvent non seulement se déplacer horizontalement à un niveau de rangement donné, mais aussi être amenés d'un niveau à un autre d'une allée, lorsqu'ils transportent ou non un contenant de stockage, par des élévateurs (également appelés élévateurs/descendeurs ou convoyeur en spirale, ou mini-transstockeur (« miniload » en anglais)...) qui sont disposés à une ou aux deux extrémités des allées (voire au milieu). Ces élévateurs permettent en outre le transfert d'un contenant de stockage placé sur un chariot vers l'ensemble de convoyeurs.

Le système de pilotage gère la commande associée à chaque colis (contenant d'expédition) et listant des contenants de stockage (charges), en fonction de l'emplacement de ces contenants de stockage dans le magasin de stockage, de la disponibilité des chariots et des élévateurs du magasin de stockage, ainsi que de l'ordre dans lequel ces contenants de stockage doivent se succéder au poste de préparation de commande. Ceci a pour but d'optimiser tous les déplacements et les temps de préparation des colis et d'assurer la synchronisation entre l'arrivée, au poste de préparation, d'un colis en préparation et des contenants de stockage listés dans la commande associée à ce colis en préparation.

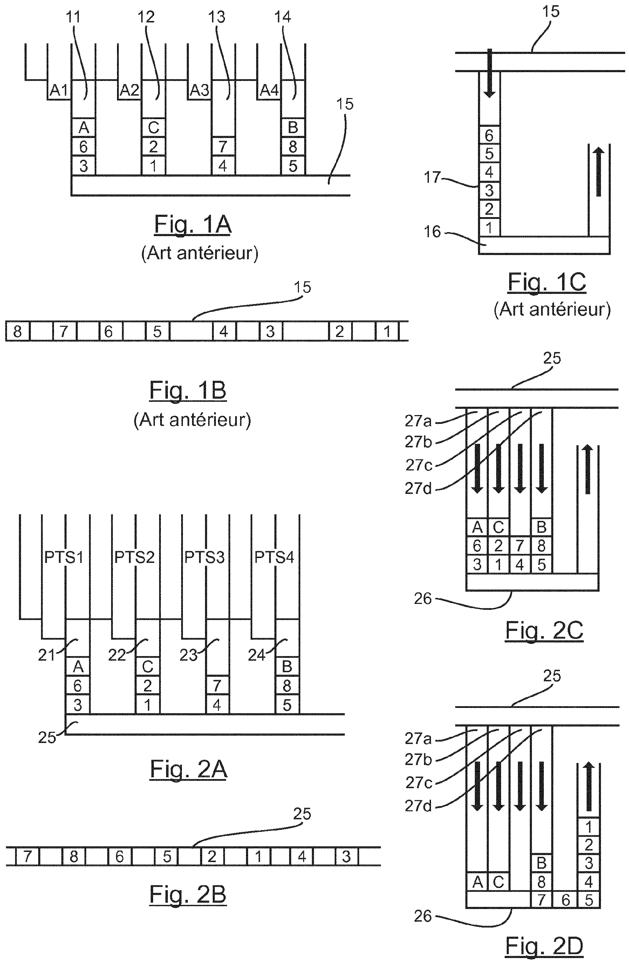

On présente maintenant plus en détail, en relation avec les **figures 1A, 1B et 1C**, une technique actuelle de traitement d'une commande par le système de pilotage, dans le contexte particulier (présenté ci-dessus) d'un système automatisé de préparation de colis. Dans un souci de simplification, tous les éléments constitutifs du système de distribution automatisé ne sont pas représentés sur ces figures.

La **figure 1A** présente uniquement :
- les extrémités de quatre ensembles de rangement (référencés A1 à A4), qui font partie du magasin de stockage automatisé et constituent quatre sources stockant des charges (contenants de stockage) ;
- une pluralité de dispositifs tampons (appelés par la suite « dispositifs tampons sources »), de type FIFO (pour « First In First Out » en anglais, ou « premier entré premier sorti» en français) (référencés 11 à 14) et placés chacun immédiatement en aval d'un de quatre ensembles de rangement A1 à A4 ; et
- un collecteur principal 15 (composé par exemple d'un ou plusieurs convoyeurs), amenant les contenants de stockage sortant des dispositifs tampons sources 11 à 14 jusqu'au poste de préparation de commande. Le collecteur principal 15 sert donc à délocaliser le poste de préparation de commande par rapport au magasin de stockage automatisé. En effet, les bâtiments ne permettent pas toujours de disposer le poste préparation de commande à côté du magasin de stockage.

La **figure 1C** présente uniquement :
- le collecteur principal 15 ;
- le poste de préparation de commande 16, comprenant un collecteur secondaire (composé par exemple d'un ou plusieurs convoyeurs) et constituant une destination recevant des charges (contenants de stockage) ; et
- un dispositif tampon (appelé par la suite « dispositif tampon destination »), de type FIFO (référencé 17) et placé en amont du poste de préparation de commande 16.

Dans cet exemple, on suppose que la commande liste huit charges dans un ordre donné, correspondant à l'ordre croissant des références 1 à 8 que ces charges portent sur les figures. En d'autres termes, le poste de préparation de commande 16 doit recevoir ces huit charges dans l'ordre de 1 à 8.

On suppose également que les charges référencées 3 et 6 sont stockées dans l'ensembles de rangement référencé A1, les charges référencées 1 et 2 sont stockées dans l'ensemble de rangement référencé A2, les charges référencées 4 et 7 sont stockées dans l'ensemble de rangement référencé A3, et les charges référencées 5 et 8 sont stockées dans l'ensemble de rangement référencé A4.

Pour traiter la commande précitée, le système de pilotage effectue un premier ordonnancement « intra-source » (ordonnancement avant la sortie des sources), en commandant chacune des sources (ensembles de rangement) A1 à A4 pour que les charges de la commande qui y sont stockées en sortent conformément à l'ordre donné. Ainsi, comme illustré sur la **figure 1A**, le dispositif tampon source 11 (placé en aval de l'ensemble de rangement A1) reçoit successivement les charges référencées 3 et 6. Le dispositif tampon source 12 (placé en aval de l'ensemble de rangement A2) reçoit successivement les charges référencées 1 et 2. Le dispositif tampon source 13 (placé en aval de l'ensemble de rangement A3) reçoit successivement les charges référencées 4 et 7. Le dispositif tampon source 14 (placé en aval de l'ensemble de rangement A4) reçoit successivement les charges référencées 5 et 8.

Puis, le système de pilotage effectue un deuxième ordonnancement « inter-sources » (ordonnancement après la sortie des sources), en commandant la pluralité de dispositifs tampons sources 11 à 14 pour que les charges listées dans la commande soient placées sur le collecteur principal 15 en fonction de l'ordre donné. Il y a donc une forte contrainte de synchronisation entre les sorties des sources (ensembles de rangement). Par exemple, même si elle est prête à sortir du dispositif tampon source 13, la charge référencée 4 ne peut pas être placée sur le collecteur principal 15, pour être transmise vers le poste de préparation de commande 16, tant que les charges référencées 1, 2 et 3 n'ont pas été placées (dans cet ordre) sur le collecteur principal 15.

La **figure 1B** illustre les charges référencées 1 à 8 en cours de transport par le collecteur principal 15, après y avoir été placées dans l'ordre voulu (de 1 à 8).

Enfin, comme illustré sur la **figure 1C**, le système de pilotage commande le dispositif tampon destination 17 pour que les charges (qui y entrent déjà triées selon l'ordre voulu) en ressortent au rythme souhaité pour être présentées au poste de préparation de commande 16.

La technique actuelle permet de traiter simultanément plusieurs commandes, si chacune de celles-ci est destinée à un poste de préparation de commande distinct.

Comme mentionné ci-dessus, un inconvénient majeur de la technique connue, illustrée sur les figures 1A à 1C, est qu'il y a une forte contrainte de synchronisation entre les sorties des sources (ensembles de rangement). Les sources ne peuvent donc pas travailler à des rythmes différents et sur des commandes différentes. Le retard d'une source retarde les autres. En outre, le taux de remplissage du collecteur principal n'est pas optimal.

Un autre inconvénient de la technique connue est que, dans le cas où il y a plusieurs destinations (postes de préparation), elles ne sont pas indépendantes les unes par rapport aux autres. En effet, dans le cas où plusieurs commandes, destinées à différents postes de préparation, sont traitées simultanément, un incident sur une destination (poste de préparation) perturbe les autres destinations. Si des charges présentes sur le collecteur principal ne peuvent pas être placées sur le dispositif tampon destination placé en amont d'une destination (poste de préparation) donnée, alors les autres charges sont bloquées sur le collecteur principal. De même, une variation de cadence d'une destination peut bloquer ou perturber la cadence des autres destinations.

Le document EP 1 964 792 A2 décrit un autre exemple de système présentant les mêmes inconvénients.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de traitement d'une commande par un système de pilotage d'un système de distribution automatisé, cette technique permettant de se libérer de la contrainte (qui existe dans la technique connue) de synchronisation entre les sorties des sources (synchronisation qui engendre une perte non négligeable des cadences nominales de chaque source).

Au moins un mode de réalisation de l'invention a également pour objectif de fournir une telle technique permettant de rendre les destinations indépendantes les unes par rapport aux autres.

Un autre objectif d'au moins un mode de réalisation de l'invention est de fournir une telle technique qui soit simple à mettre en oeuvre et peu coûteuse.

Un autre objectif d'au moins un mode de réalisation de l'invention est de fournir une telle technique permettant de traiter simultanément plusieurs commandes destinées à un même poste de préparation de commande.

### 4. EXPOSÉ DE L'INVENTION

Dans un mode de réalisation particulier de l'invention, il est proposé un système de distribution automatisé comprenant des sources stockant des charges, au moins une destination recevant des charges et un système de pilotage adapté pour traiter des commandes. Le système de distribution automatisé comprend en outre : un premier système de transport commun pour le transport des charges sortant des sources ; et, en aval du premier système de transport commun et en amont de et associée à chaque destination, au moins une pluralité de premiers dispositifs tampons de type FIFO, duaux chacun d'une des sources. Pour traiter une commande donnée listant des charges devant être extraites des sources et fournies dans un ordre donné à une destination donnée, le système de pilotage est adapté pour :
- effectuer un premier ordonnancement, en commandant chaque source pour que les charges de la commande donnée stockées dans ladite source sortent de ladite source conformément à l'ordre donné ;
- effectuer un second ordonnancement :
   * en aiguillant chacune des charges de la commande donnée, sortant du premier système de transport commun en provenance d'une source donnée, vers le premier dispositif tampon associé à la destination donnée et dual de la source donnée ; et
   * en commandant la pluralité de premiers dispositifs tampons associés à la destination donnée pour que les charges listées dans la commande donnée sortent vers la destination donnée en fonction de l'ordre donné, ou en fournissant, via une interface homme-machine, à un opérateur situé à la destination donnée des informations pour prendre, en fonction de l'ordre donné, les charges listées dans la commande donnée, dans les premiers dispositifs tampons associés à la destination donnée.

Le principe général de l'invention consiste donc à combiner un premier ordonnancement « intra-source » (ordonnancement avant la sortie des sources) et un deuxième ordonnancement « inter-sources » (ordonnancement après la sortie des sources), comme dans la technique connue. Mais contrairement à la technique connue, le deuxième ordonnancement « inter-sources » selon la technique proposée n'est pas effectué en commandant une pluralité de dispositifs tampons de type FIFO (référencés 11 à 14 sur la figure 1A) placés chacun immédiatement en aval d'une des sources, mais en commandant une pluralité de premiers dispositifs tampons de type FIFO associés à et placés en amont de chaque destination.

Ainsi, cette approche tout à fait nouvelle et inventive permet de se libérer de la contrainte, qui existe dans la technique connue, de synchronisation entre les sorties des sources. En d'autres termes, il y a une désynchronisation des sorties des sources, qui peuvent travailler à des rythmes différents et sur des commandes différentes. Le retard d'une source ne retarde pas les autres sources. L'anticipation est aussi possible.

Chaque source travaille au rythme des commandes et n'est pas limitée par celui des ordonnancements qui se font à destination. Les performances s'en trouvent accrues.

En outre, un bon dimensionnement des premiers dispositifs tampons associés à chaque destination peut couvrir (masquer) le temps de réaction du système de distribution automatisé, y compris sa fluctuation.

Un autre avantage de la technique proposée est que, dans le cas où il y a plusieurs destinations, elles sont indépendants les unes par rapport aux autres (et donc ne se perturbent pas entre elles) puisque chaque destination coopère avec sa propre pluralité de premiers dispositifs tampons.

Dans un mode de réalisation particulier (et non limitatif), chaque destination est un poste de préparation de commande et chaque source est une partie d'un magasin de stockage (par exemple un ensemble de rangement), un magasin de stockage, ou encore un groupe de magasins de stockage.

Selon un aspect particulier de l'invention, le système de distribution automatisé comprend, associés à au moins une même destination donnée, au moins deux pluralités de premiers dispositifs tampons, de type FIFO et duaux chacun d'une des sources. En outre, pour traiter simultanément au moins deux commandes listant des charges devant être fournies à ladite même destination donnée, chaque pluralité de premiers dispositifs tampons est utilisée, dans le cadre du second ordonnancement, pour le traitement d'une commande distincte parmi lesdites au moins deux commandes.

Ainsi, il est possible de traiter simultanément plusieurs commandes destinées à la même destination.

Selon une caractéristique particulière, le système de distribution automatisé comprend :
- un second dispositif tampon de type FIFO placé immédiatement en aval de chaque source et en amont du premier système de transport commun ; et/ou
- un troisième dispositif tampon de type FIFO placé immédiatement en amont de chaque destination et en aval du premier système de transport commun.

Les seconds dispositifs tampons (appelés par la suite dispositifs tampons sources) et les troisièmes dispositifs tampons (appelés par la suite dispositifs tampons destinations) permettent de réduire le temps de réaction de l'ensemble du système de distribution.

Selon une première mise en oeuvre particulière, le système de distribution automatisé comprend au moins deux destinations associées chacune à au moins une pluralité de premiers dispositifs tampons, et le premier système de transport commun transporte les charges entre les sources et les pluralités de premiers dispositifs tampons associées aux destinations.

Ainsi, la technique proposée est compatible avec la mise en oeuvre d'un premier système de transport commun, permettant de délocaliser les premiers dispositifs tampons (et donc également les destinations) par rapport aux sources. Grâce à l'approche nouvelle et inventive précitée, ce premier système de transport commun est mieux utilisé (taux de remplissage accru) que dans la technique connue.

Avantageusement, le système de pilotage est adapté pour, sur détection d'une place libre dans l'un des premiers dispositifs tampons associés à une destination donnée, déclencher un ordre de sortie, afin qu'une charge, destinée audit premier dispositif tampon, sorte de la source dont ledit premier dispositif tampon est dual, ou sorte d'un dispositif tampon de type FIFO placé immédiatement en aval de la source dont ledit premier dispositif tampon est dual, la charge sortie étant prise en charge par ledit premier système de transport commun.

Cette règle garantit que même en cas de problème dans une destination donnée, une charge transmise par une source donnée vers cette destination donnée peut toujours être évacuée dans le premier dispositif tampon placé en amont de cette destination donnée et dual de cette source donnée. Cette charge ne gênera pas l'utilisation du premier système de transport commun pour les charges destinées à d'autre(s) destination(s).

Avantageusement, au moins pour un premier dispositif tampon donné, le système de pilotage est adapté pour délivrer un nombre d'ordres de sortie supérieur au nombre de places libres dans ledit dispositif tampon donné.

En d'autres termes, on accepte d'assouplir légèrement la règle précitée. On anticipe la libération de N place(s) dans le premier dispositif tampon, en prenant un très léger risque. N est par exemple égal à un ou deux, voire plus en fonction de la configuration du système.

Avantageusement, le système de distribution automatisé comprend au moins deux destinations associées chacune à au moins une pluralité de premiers dispositifs tampons, et il comprend un deuxième système de transport commun pour le transport de charges entre les destinations et les pluralités de premiers dispositifs tampons associées aux destinations.

Ainsi, la technique proposée est compatible avec la mise en oeuvre d'un deuxième système de transport commun, permettant de délocaliser les premiers dispositifs tampons par rapport aux destinations.

Avantageusement, le système de pilotage est adapté pour effectuer une affectation dynamique des premiers dispositifs tampons parmi les destinations, en fonction de la ou les destinations effectivement utilisée(s).

De cette façon, on optimise l'utilisation des premiers dispositifs tampons. Cela permet par exemple d'augmenter le nombre de commandes destinées à une même destination et pouvant être traitées simultanément.

Selon une deuxième mise en oeuvre particulière, le système de distribution automatisé comprend au moins deux destinations associées chacune à au moins une pluralité de premiers dispositifs tampons, et en ce qu'il comprend, dans ou pour chaque source, un élévateur permettant de sortir des charges hors de ladite source sur plusieurs niveaux, vers des premiers dispositifs tampons qui :
- sont duaux chacun de ladite source,
- sont associés chacun à une destination distincte, et
- se trouvent chacun à un niveau distinct parmi lesdits niveaux.

Cette deuxième mise en oeuvre particulière permet de traiter simultanément plusieurs commandes, sans système de transport commun.

Dans un autre mode de réalisation de l'invention, il est proposé un procédé de traitement d'une commande par un système de pilotage d'un système de distribution automatisé, ledit système de distribution automatisé comprenant des sources stockant des charges, un premier système de transport commun pour le transport de charges sortant des sources, et au moins une destination recevant des charges, ledit procédé comprenant les étapes suivantes, pour traiter une commande donnée listant des charges devant être extraites des sources et fournies dans un ordre donné à une destination donnée :
- le système de pilotage effectue un premier ordonnancement, en commandant chaque source pour que les charges de la commande donnée stockées dans ladite source sortent de ladite source conformément à l'ordre donné ;
- le système de pilotage effectue un second ordonnancement :
   * en aiguillant chacune des charges de la commande donnée, sortant du premier système de transport commun en provenance d'une source donnée, vers un dispositif tampon associé à la destination donnée et dual de la source donnée, une pluralité de dispositifs tampons de type FIFO étant associés à et situés en amont de chaque destination et duaux chacun d'une des sources, ladite pluralité de dispositifs tampons de type FIFO étant situés en aval du premier système de transport commun ; et
   * en commandant la pluralité de dispositifs tampons associés à la destination donnée pour que les charges listées dans la commande donnée sortent vers la destination donnée en fonction de l'ordre donné, ou en fournissant, via une interface homme-machine, à un opérateur situé à la destination donnée des informations pour prendre, en fonction de l'ordre donné, les charges listées dans la commande donnée, dans les dispositifs tampons associés à la destination donnée.

Dans un autre mode de réalisation de l'invention, il est proposé l'utilisation d'un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé l'utilisation d'un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1A à 1C, déjà décrites en relation avec l'art antérieur, présentent une technique de traitement d'une commande par un système de pilotage, dans un système de distribution automatisé classique ;
- les figures 2A à 2D présentent une technique de traitement d'une commande par un système de pilotage, dans un système de distribution automatisé selon un premier mode de réalisation de l'invention ;
- les figures 3A à 3D illustrent un exemple de commande de l'une des sources par le système de pilotage, dans le contexte du système de distribution automatisé des figures 2A à 2D ;
- les figures 4A à 4D présentent une technique de traitement d'une commande par un système de pilotage, dans un système de distribution automatisé selon un second mode de réalisation de l'invention ;
- la figure 5 présente la structure d'un système de pilotage selon un mode de réalisation particulier de l'invention ;
- la figure 6 présente un organigramme simplifié du procédé mis en oeuvre par le système de pilotage, dans le premier mode de réalisation de l'invention illustré sur les figures 2A à 2D ;
- la figure 7 présente une technique de traitement d'une commande par un système de pilotage, dans un système de distribution automatisé selon un troisième mode de réalisation de l'invention ;
- la figure 8 présente une technique de traitement d'une commande par un système de pilotage, dans un système de distribution automatisé selon un quatrième mode de réalisation de l'invention ; et
- la figure 9 présente une technique de traitement d'une commande par un système de pilotage, dans un système de distribution automatisé selon un cinquième mode de réalisation de l'invention.

### 6. DESCRIPTION DÉTAILLÉE

Sur toutes les figures du présent document, les éléments et étapes identiques sont désignés par une même référence numérique.

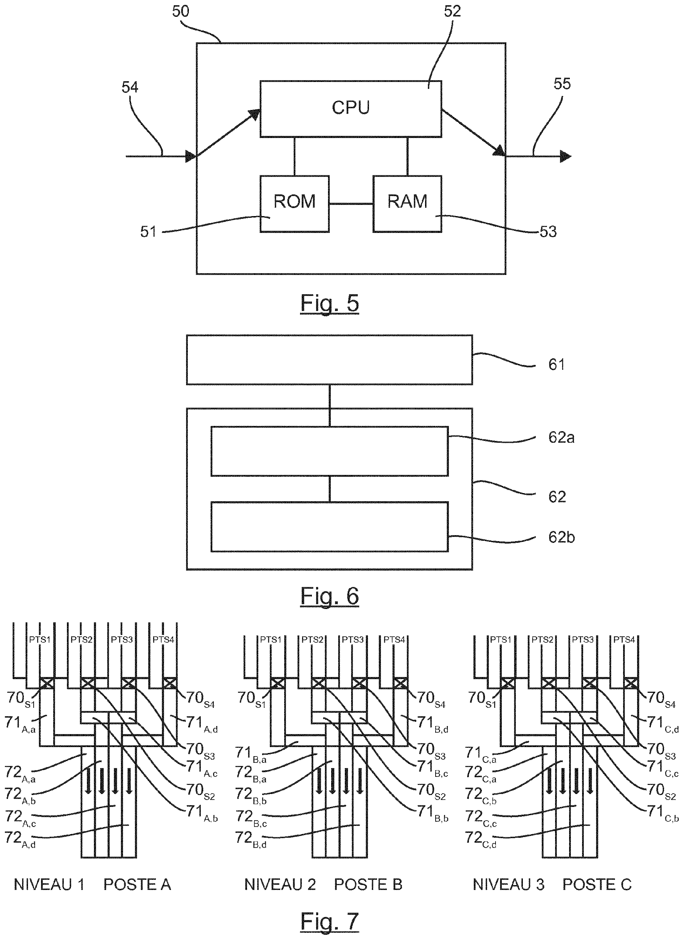

On présente maintenant, en relation avec les **figures 2A à 2D** **et** **6**, une technique de traitement d'une commande par un système de pilotage, dans un système de distribution automatisé selon un premier mode de réalisation de l'invention.

A titre d'exemple, on suppose que le système de distribution automatisé est utilisé pour la préparation de colis et comprend :
- un magasin de stockage automatisé renfermant les produits dans des contenants de stockage (ces contenants de stockage sont aussi appelés charges), chaque contenant de stockage étant associé à une référence unique de produit ;
- un poste de préparation de commande, où les produits sont prélevés et placés par un opérateur dans un colis (aussi appelé contenant d'expédition) ;
- un ensemble de convoyeurs amenant les contenants de stockage, dans lesquels se trouvent les produits, du magasin de stockage au poste de préparation de commande et réciproquement ; et
- un système de pilotage (WCS).

Le magasin de stockage automatisé et le système de pilotage sont par exemple réalisés comme décrit dans le brevet FR 2 915 979 déposé par la demanderesse (voir plus haut le résumé de cette technique).

Dans un souci de simplification, tous les éléments constitutifs du système de distribution automatisé ne sont pas représentés sur les figures 2A à 2D.

La **figure 2A** présente uniquement :
- les extrémités de quatre ensembles de rangement (référencés PTS1 à PTS4), qui font partie du magasin de stockage automatisé et constituent quatre sources stockant des charges (contenants de stockage) ;
- une pluralité de dispositifs tampons sources, de type FIFO (référencés 21 à 24), et placés chacun en aval d'un de quatre ensembles de rangement PTS1 à PTS4. Chaque dispositif tampon source est par exemple un convoyeur ou tout autre système d'accumulation ou de stockage ; et
- un collecteur principal 25 (aussi appelé « système de transport », et composé par exemple d'un ou plusieurs convoyeurs), amenant les contenants de stockage sortant des dispositifs tampons sources 21 à 24 jusqu'au poste de préparation de commande. Le collecteur principal 25 sert donc a délocaliser le poste de préparation de commande par rapport au magasin de stockage automatisé. En effet, les bâtiments ne permettent pas toujours de disposer le poste préparation de commande à côté du magasin de stockage.

Chacune des **figures 2C et 2D** présente uniquement :
- le collecteur principal 25 ;
- le poste de préparation de commande 26, comprenant un collecteur secondaire (composé par exemple d'un ou plusieurs convoyeurs) et constituant une destination recevant des charges (contenants de stockage) ; et
- une pluralité de dispositifs tampons destination, de type FIFO (référencés 27a à 27d) et placés en amont du poste de préparation de commande 26 et duaux chacun d'un des quatre ensembles de rangement (sources) PTS1 à PTS4. Chaque dispositif tampon destination est par exemple un convoyeur ou tout autre système d'accumulation ou de stockage.

Dans cet exemple (comme dans l'exemple présenté sur les figures 1A à 1C), on suppose que la commande liste huit charges dans un ordre donné, correspondant à l'ordre croissant des références 1 à 8 que portent ces charges sur les figures. En d'autres termes, le poste de préparation de commande 26 doit recevoir ces huit charges dans l'ordre de 1 à 8.

On suppose également que les charges référencées 3 et 6 sont stockées dans l'ensemble de rangement référencé PTS1, les charges référencées 1 et 2 sont stockées dans l'ensemble de rangement référencé PTS2, les charges référencées 4 et 7 sont stockées dans l'ensemble de rangement référencé PTS3, et les charges référencées 5 et 8 sont stockées dans l'ensemble de rangement référencé PTS4.

Pour traiter la commande précitée, le système de pilotage effectue un premier ordonnancement (étape 61 de la **figure 6**), en commandant chacune des sources (ensembles de rangement) PTS1 à PTS4 pour que les charges de la commande qui y sont stockées en sortent conformément à l'ordre donné. Ainsi, comme illustré sur la **figure 2A**, le dispositif tampon source référencé 21 (placé en aval de l'ensemble de rangement PTS1) reçoit successivement les charges référencées 3 et 6. Le dispositif tampon source référencé 22 (placé en aval de l'ensemble de rangement PTS2) reçoit successivement les charges référencées 1 et 2. Le dispositif tampon source référencé 23 (placé en aval de l'ensemble de rangement PTS3) reçoit successivement les charges référencées 4 et 7. Le dispositif tampon source référencé 24 (placé en aval de l'ensemble de rangement PTS4) reçoit successivement les charges référencées 5 et 8.

Puis le système de pilotage commande la pluralité de dispositifs tampons source 21 à 24 pour que les charges listées dans la commande soient placées sur le collecteur principal 25 au fur et à mesure où elles arrivent en sortie des dispositifs tampons 21 à 24, source sans s'occuper de l'ordre de placement dans la commande et donc sans contraintes de synchronisation entre les sorties des sources (ensembles de rangement) PTS1 à PTS4. Ainsi, les charges listées dans la commande ne sont pas placées sur le collecteur principal 25 en fonction de l'ordre donné. Par exemple, si elle est prête à sortir du dispositif tampon source 21, la charge référencée 3 est placée sur le collecteur principal 25, pour être transmise vers le poste de préparation de commande 26, même si les charges référencées 1 et 2 n'ont pas encore été placées sur le collecteur principal 25.

La **figure 2B** illustre les charges référencées 1 à 8 en cours de transport par le collecteur principal 25, après y avoir été placées dans l'ordre suivant : 3, 4, 1, 2, 5, 6, 8, 7 (et non pas dans l'ordre (1 à 8) de la commande).

Puis le système de pilotage effectue un second ordonnancement (étape 62 de la **figure 6**), avec une première phase (étape 62a de la **figure 6**) d'aiguillage de chacune des charges de la commande, sortant d'une source donnée (parmi PTS1 à PTS4), vers le dispositif tampon destination (parmi 27a à 27d) situé en amont du poste de préparation de commande 26 et dual de la source donnée. Dans l'exemple précité, la charge référencée 3 est aiguillée vers le dispositif tampon destination référencé 27a (dual de la source PTS1), la charge référencée 4 est aiguillée vers le dispositif tampon destination référencé 27c (dual de la source PTS3), la charge référencée 1 est aiguillée vers le dispositif tampon destination référencé 27b (dual de la source PTS2), etc. Comme illustré sur la **figure 2C**, le dispositif tampon destination référencé 27a (dual du dispositif tampon source référencé 21) reçoit successivement les charges référencées 3 et 6. Le dispositif tampon destination référencé 27b (dual du dispositif tampon source référencé 22) reçoit successivement les charges référencées 1 et 2. Le dispositif tampon destination référencé 27c (dual du dispositif tampon source référencé 23) reçoit successivement les charges référencées 4 et 7. Le dispositif tampon destination référencé 27d (dual du dispositif tampon source référencé 24) reçoit successivement les charges référencées 5 et 8. Pour chaque charge, l'aiguillage est par exemple effectué grâce à des moyens de lecture d'un identifiant de la charge (par exemple un lecteur code barre ou un lecteur d'étiquette RFID ou même en utilisant une technique de suivi (« tracking » en anglais), qui coopèrent avec des moyens (par exemple un convoyeur à rouleaux) de déplacement de la charge vers le dispositif tampon destination souhaité (parmi 27a à 27d).

Toujours dans le cadre du second ordonnancement, et comme illustré sur la **figure 2D**, le système de pilotage, dans une seconde phase (étape 62b de la **figure 6**), commande les dispositifs tampons destinations 27a à 27d pour que les charges en ressortent suivant l'ordre de la commande (de 1 à 8), pour être présentées au poste de préparation de commande 26.

Dans une variante de cette seconde phase, le système de pilotage fournit, via une interface homme-machine (non représentée), à un opérateur situé au poste de préparation de commande 26 des informations pour que cet opérateur prenne, suivant l'ordre de la commande, les charges listées dans la commande et qui se présentent dans les dispositifs tampons destinations 27a à 27d situés devant lui.

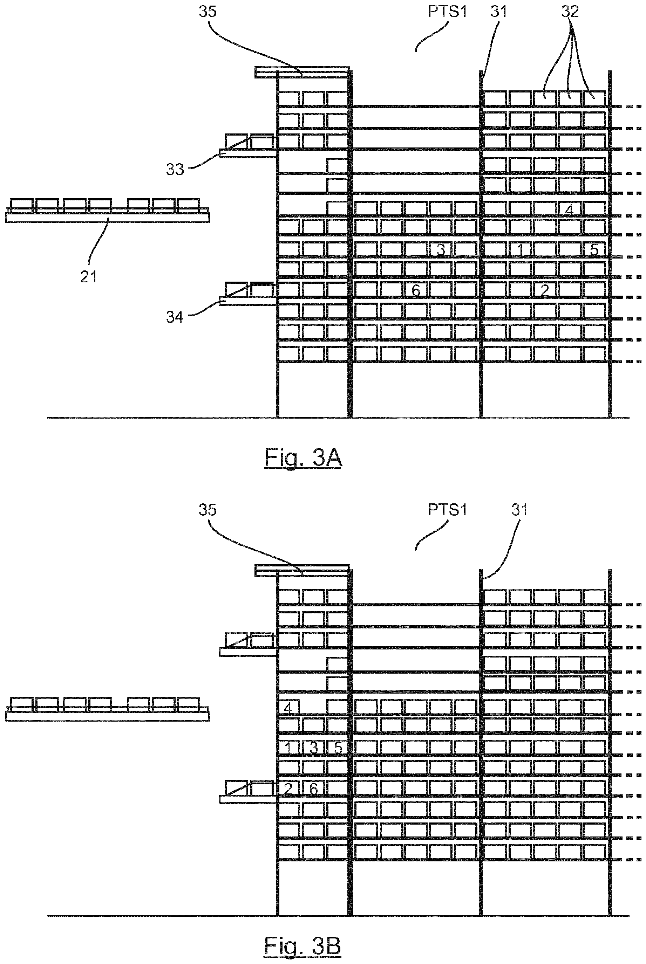

On présente maintenant, en relation avec les **figures 3A à 3D**, un exemple de commande de l'un des ensembles de rangement (sources) PTS1 à PTS4 par le système de pilotage, dans le contexte du système de distribution automatisé des figures 2A à 2D.

Chacune des figures 3A à 3D présente une coupe longitudinale d'un ensemble de rangement (par exemple PTS1) comprenant une allée desservant de part et d'autre une étagère de stockage 31 à plusieurs niveaux de rangements superposés. Chaque étagère est subdivisée sur sa longueur en emplacements de stockage (également appelés cellules) 32 destinés à accueillir chacune une charge (contenant de stockage). L'allée reçoit, à chaque niveau de rangement, des voies pour le déplacement d'une navette (aussi appelée dispositif de transfert ou chariot) qui assure le déplacement des charges, pour leur mise en place à l'intérieur des emplacements de stockage et pour leur prélèvement depuis ces emplacements.

L'ensemble de rangement comprend également des élévateurs 33, 34 (aussi appelés élévateurs/descendeurs), qui sont disposés à une extrémité de l'allée et permettent d'amener les charges vers les étagères de stockage (en vue de leur stockage à l'intérieur des emplacements de stockage) ou d'évacuer les charges hors des étagères de stockage (en vue de leur transfert sur un dispositif tampon source (référencé 21 dans le cas de l'ensemble de rangement PTS1). Par exemple, un élévateur est utilisé pour les entrées de charges dans les étagères de stockage et l'autre élévateur est utilisé pour les sorties de charges hors des étagères de stockage. Un troisième élévateur (non représenté) ou bien l'un des deux élévateurs précités (entrée ou sortie), peut être utilisé pour déplacer les navettes d'un niveau à un autre de l'allée.

Dans l'exemple des figures 3A à 3D, chaque étagère comprend, à chaque niveau, une zone tampon 35, dans laquelle des charges sont amenées et stockées temporairement avant d'être évacuées (vers le dispositif tampon source référencé 21) par un des élévateurs.

On considère à titre d'exemple (qui diffère de celui présenté sur les figures 2A à 2D), que la commande liste douze charges dans l'ordre suivant : 1, 1', 2', 2, 3, 3', 4', 5', 4, 5, 6, 6'. On suppose également que les charges référencées 1 à 6 sont stockées dans l'ensemble de rangement référencé PTS1, et les charges référencées 1' à 6' sont stockées dans l'ensemble de rangement référencé PTS2.

On rappelle (voir ci-dessus la description de la figure 2A) que pour traiter une commande, le système de pilotage effectue un premier ordonnancement, en commandant chacun des ensembles de rangement (sources) PTS1 à PTS4 pour que les charges de la commande qui y sont stockées en sortent conformément à l'ordre donné.

Les figures 3a à 3D illustrent quatre étapes successives de ce premier ordonnancement, pour l'ensemble de rangement PTS1.

Dans une première étape illustrée sur la **figure 3A**, en fonction de la commande à traiter, le système de pilotage choisit les charges (charges référencées 1 à 6 dans l'exemple considéré) à sortir de l'ensemble de rangement PTS1 et attribue des missions aux différents éléments de l'ensemble de rangement, en fonction de l'emplacement de ces charges dans les étagères 31, de la disponibilité des navettes et des élévateurs, ainsi que de l'ordre dans lequel ces charges doivent sortir de l'ensemble de rangement PTS1.

Dans une deuxième étape illustrée sur la **figure 3B**, les navettes réalisent des missions dans l'ordre donné par le système de pilotage et les charges référencées 1 à 6 s'accumulent dans les zones tampon 35 aux différents niveaux des étagères 31.

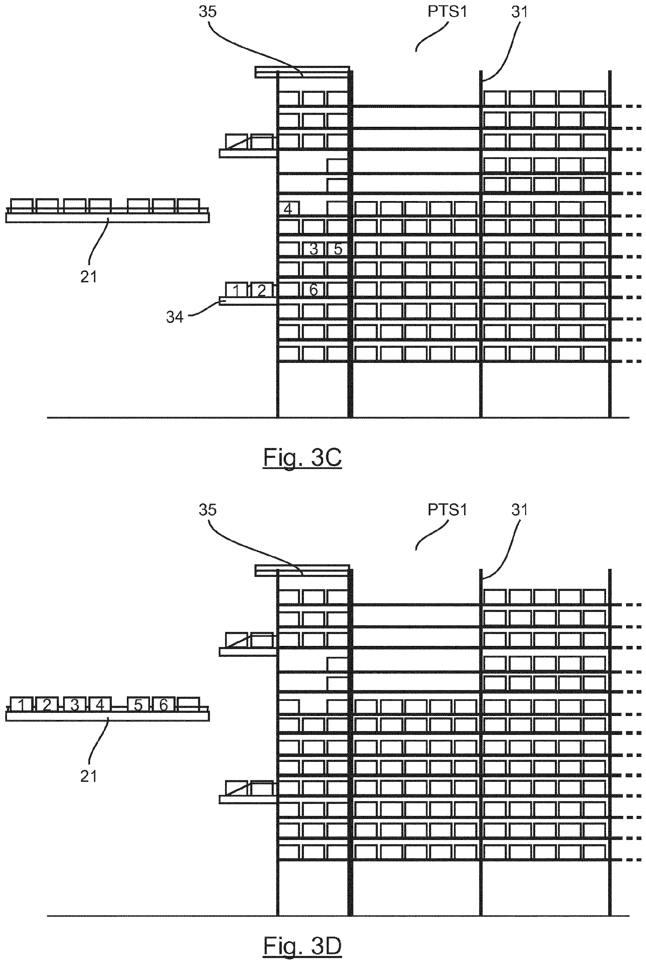

Dans une troisième étape illustrée sur la **figure 3C**, l'élévateur référencé 34 réalise des missions dans l'ordre donné par le système de pilotage. L'élévateur est un trieur qui effectue l'ordonnancement des charges. Sur la figure 3C, l'élévateur commence par sortir les charges référencées 1 et 2.

Dans une quatrième étape illustrée sur la **figure 3D**, le système de pilotage a terminé de placer sur le dispositif tampon source référencé 21, dans l'ordre souhaité, toutes les charges (référencées 1 à 6) qui étaient auparavant stockées dans l'ensemble de rangement référencé PTS 1.

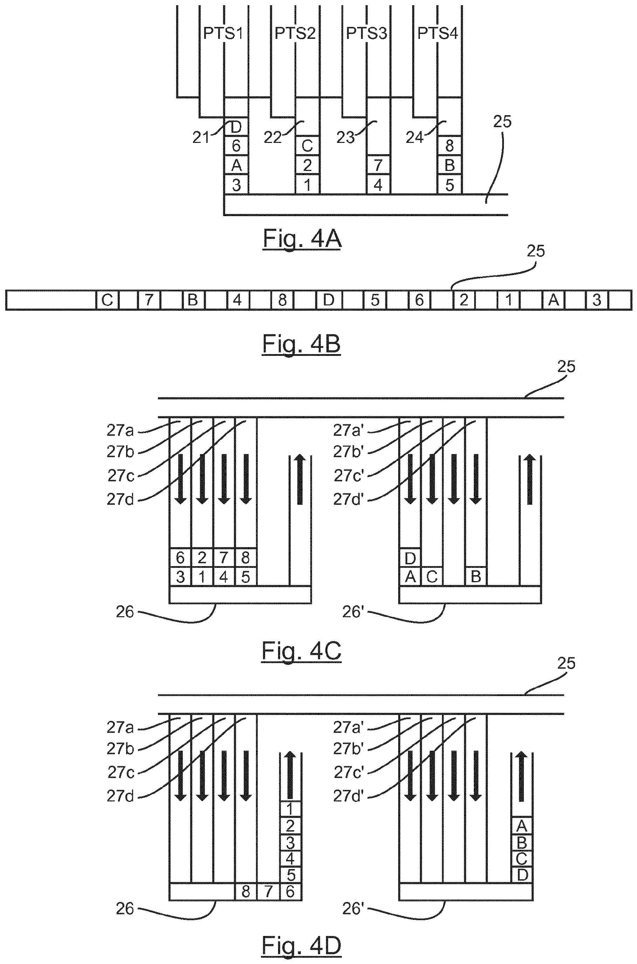

On présente maintenant, en relation avec les **figures 4A à 4D**, une technique de traitement d'une commande par un système de pilotage, dans un système de distribution automatisé selon un second mode de réalisation de l'invention.

Ce second mode de réalisation se différencie du premier en ce que le système de distribution automatisé comprend :
- un second poste de préparation de commande (référencé 26'), en plus de celui (premier) référencé 26 dans le premier mode de réalisation ; et
- une pluralité de dispositifs tampons destinations, de type FIFO (référencés 27a' à 27d') et placés en amont du second poste de préparation de commande 26' et duaux chacun d'un des quatre ensembles de rangement (sources) PTS1 à PTS4.

Le collecteur principal 25 est dans ce cas un système de transport commun, pour le transport des charges entre les ensembles de rangement PTS1 à PTS4 et les deux pluralités de dispositifs tampons destinations (référencés 27a à 27d et 27a' à 27d').

Dans cet exemple, on suppose qu'une première commande, destinée au premier poste de préparation de commande (référencé 26) liste huit charges (référencées, dans l'ordre, 1 à 8), et qu'une seconde commande, destinée au second poste de préparation de commande (référencé 26') liste quatre charges (référencées, dans l'ordre, A à D).

On suppose également que les charges référencées 3 et 6 de la première commande et les charges référencées A et D de la seconde commande sont stockées dans l'ensembles de rangement référencé PTS1, les charges référencées 1 et 2 de la première commande et la charge référencée C de la seconde commande sont stockées dans l'ensembles de rangement référencé PTS2, les charges référencées 4 et 7 de la première commande sont stockées dans l'ensembles de rangement référencé PTS3, les charges référencées 5 et 8 de la première commande et la charge référencée B de la seconde commande sont stockées dans l'ensembles de rangement référencé PTS4.

Pour traiter simultanément les première et seconde commandes précitées, le système de pilotage effectue un premier ordonnancement, en commandant chacune des sources (ensembles de rangement) PTS1 à PTS4 pour que les charges des première et seconde commandes qui y sont stockées en sortent conformément à l'ordre donné, pour chacune des commandes. Ainsi, comme illustré sur la **figure 4A**, le dispositif tampon source référencé 21 (placé en aval de l'ensemble de rangement PTS1) reçoit successivement les charges référencées 3, A, 6 et D. Le dispositif tampon source référencé 22 (placé en aval de l'ensemble de rangement PTS2) reçoit successivement les charges référencées 1, 2 et C. Le dispositif tampon source référencé 23 (placé en aval de l'ensemble de rangement PTS3) reçoit successivement les charges référencées 4 et 7. Le dispositif tampon source référencé 24 (placé en aval de l'ensemble de rangement PTS4) reçoit successivement les charges référencées 5, B et 8.

Puis le système de pilotage commande la pluralité de dispositifs tampons sources 21 à 24 pour que les charges listées dans les première et seconde commandes soient placées sur le collecteur principal 25 au fur et à mesure où elles arrivent en sortie des dispositifs tampons sources 21 à 24, sans s'occuper de l'ordre de placement dans chaque commande (ni d'un ordre entre les deux commandes) et donc sans contraintes de synchronisation entre les sorties des sources (ensembles de rangement) PTS1 à PTS4.

Dans un mode de réalisation particulier, sur détection d'une place libre dans un dispositif tampon destination donné (parmi ceux référencés 27a à 27d et situés en amont du premier poste de préparation de commande 26, et ceux référencés 27a' à 27d' et situés en amont du second poste de préparation de commande 26'), le système de pilotage déclenche un ordre de sortie, afin qu'une charge, destinée au dispositif tampon destination donné, sorte de la source (parmi PTS1 à PTS4) dont le dispositif tampon destination donné est dual, ou sorte du dispositif tampon source (parmi 21 à 24) placé immédiatement en aval de la source dont le dispositif tampon source donné est dual. La charge sortie est prise en charge par le collecteur principal 25 (système de transport commun).

Dans une variante, pour chaque dispositif tampon destination donné (parmi 27a à 27d et 27a' à 27d'), le système de pilotage est adapté pour délivrer un nombre d'ordres de sortie supérieur, d'une ou deux unités, au nombre de places libres dans ce dispositif tampon destination donné.

La **figure 4B** illustre les charges référencées 1 à 8 et A à D en cours de transport par le collecteur principal 25, après y avoir été placées dans l'ordre suivant : 3, A, 1, 2, 6, 5, D, 8, 4, B, 7 et C.

Puis le système de pilotage effectue un second ordonnancement :
- en aiguillant chacune des charges de la première commande, sortant d'une source donnée (parmi PTS1 à PTS4), vers le dispositif tampon destination (parmi 27a à 27d) situé en amont du premier poste de préparation de commande 26 et dual de la source donnée ; et
- en aiguillant chacune des charges de la seconde commande, sortant d'une source donnée (parmi PTS1 à PTS4), vers le dispositif tampon destination (parmi 27a' à 27d') situé en amont du second poste de préparation de commande 26' et dual de la source donnée.

Comme illustré sur la **figure 4C**, le dispositif tampon destination référencé 27a (dual du dispositif tampon source référencé 21) reçoit successivement les charges référencées 3 et 6. Le dispositif tampon destination référencé 27b (dual du dispositif tampon source référencé 22) reçoit successivement les charges référencées 1 et 2. Le dispositif tampon destination référencé 27c (dual du dispositif tampon source référencé 23) reçoit successivement les charges référencées 4 et 7. Le dispositif tampon destination référencé 27d (dual du dispositif tampon source référencé 24) reçoit successivement les charges référencées 5 et 8. Le dispositif tampon destination référencé 27a' (dual du dispositif tampon source référencé 21) reçoit successivement les charges référencées A et D. Le dispositif tampon destination référencé 27b' (dual du dispositif tampon source référencé 22) reçoit la charge référencée C. Le dispositif tampon destination référencé 27d' (dual du dispositif tampon source référencé 24) reçoit la charge référencée B.

Toujours dans le cadre du second ordonnancement, et comme illustré sur la **figure 4D**, le système de pilotage commande (dans une seconde phase) les dispositifs tampons destination 27a à 27d pour que les charges en ressortent suivant l'ordre de la première commande (de 1 à 8), pour être présentées au premier poste de préparation de commande 26, et commande les dispositifs tampons destinations 27a' à 27d' pour que les charges en ressortent suivant l'ordre de la seconde commande (de A à D), pour être présentées au second poste de préparation de commande 26'.

Dans une variante de cette seconde phase, le système de pilotage fournit, via une interface homme-machine (non représentée) :
- à un premier opérateur situé au premier poste de préparation de commande 26 des informations pour que celui-ci prenne, suivant l'ordre de la première commande, les charges listées dans la première commande et qui se présentent dans les dispositifs tampons destinations 27a à 27d situés devant lui ; et
- à un second opérateur situé au second poste de préparation de commande 26' des informations pour que celui-ci prenne, suivant l'ordre de la seconde commande, les charges listées dans la seconde commande et qui se présentent dans les dispositifs tampons destinations 27a' à 27d' situés devant lui.

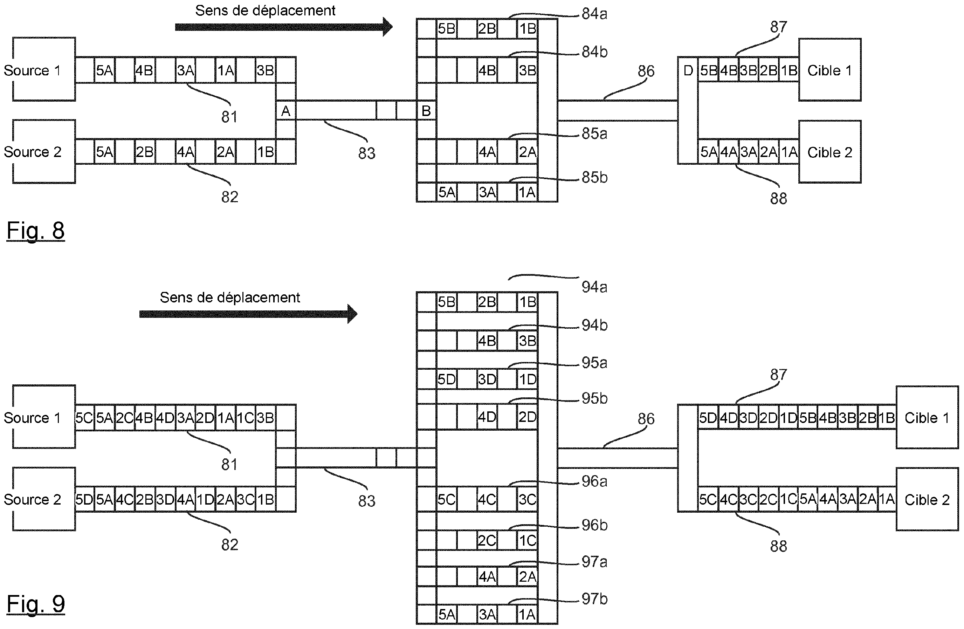

La **figure 5** présente la structure simplifiée d'un système de pilotage 50 selon un mode de réalisation particulier de l'invention. Ce système de pilotage comprend une mémoire RAM 53, une unité de traitement (CPU) 52, équipée par exemple d'un processeur, et pilotée par un programme d'ordinateur stocké dans une mémoire ROM 51. A l'initialisation, les instructions de code du programme d'ordinateur sont par exemple chargées dans la mémoire RAM 53 avant d'être exécutées par le processeur de l'unité de traitement 52, pour mettre en oeuvre la technique de traitement d'une commande selon le premier mode de réalisation de l'invention (voir les figures 2A à 2D et 3A à 3D), le second mode de réalisation de l'invention (voir les figures 4A à 4D), le troisième mode de réalisation (voir la figure 7), le quatrième mode de réalisation (voir la figure 8) ou le cinquième mode de réalisation (voir la figure 9). L'unité de traitement 52 reçoit en entrée une ou plusieurs commandes 54 (chacune étant destinée à une destination parmi une ou plusieurs destinations ; plusieurs commandes pouvant être traitées simultanément si elles sont destinées à des destinations différentes). Le processeur de l'unité de traitement 52 traite la ou les commandes 54 et génère en sortie des instructions ou commandes 55 permettant de piloter (commander) différents éléments compris dans le système de distribution automatisé, notamment :
- les ensembles de rangement PTS1 à PTS4 (comprenant eux-mêmes des navettes, des élévateurs, des convoyeurs, etc) ;
- les dispositifs tampons sources, de type FIFO (référencés 21 à 24) et placés chacun en aval d'un de quatre ensembles de rangement PTS1 à PTS4 ;
- le collecteur principal (référencé 25), composé par exemple d'un ou plusieurs convoyeurs ;
- le ou les postes de préparation de commande (référencés 26 et 26'), comprenant chacun un collecteur secondaire ;
- les dispositifs tampons destinations, de type FIFO (référencés 27a à 27d et 27a' à 27d'), chacun étant placé en amont d'un poste de préparation de commande 26, 26' et étant dual d'un des quatre ensembles de rangement PTS1 à PTS4.

Cette figure 5 illustre seulement une manière particulière, parmi plusieurs possibles, de réaliser la technique de l'invention, dans l'un quelconque de ses modes de réalisation. En effet, le système de pilotage se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où le système de pilotage est réalisé avec une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

On présente maintenant, en relation avec la **figure 7**, une technique de traitement d'une commande par un système de pilotage, dans un système de distribution automatisé selon un troisième mode de réalisation de l'invention.

Dans cet exemple, le système de distribution comprend quatre ensembles de rangement (référencés PTS1 à PTS4), qui font partie d'un magasin de stockage automatisé et constituent quatre sources stockant des charges. Chacune de ces sources PTS1 à PTS4 comprend un élévateur 70ₛ₁ à 70ₛ₄ permettant de sortir des charges (hors de la source concernée) sur trois niveaux (appelés niveau 1, niveau 2 et niveau 3 par la suite).

Les parties gauche, centrale et droite de la figure 7 présentent chacune un de ces trois niveaux. Pour chaque niveau, le système de distribution comprend :
- un poste de préparation de commande (appelés postes A, B et C par la suite, pour les niveaux 1, 2 et 3 respectivement) ;
- une pluralité de dispositifs tampons destination, de type FIFO (référencés 72_{A,a} à 72_{A,d} pour le niveau 1, 72_{B,a} à 72_{B,d} pour le niveau 2 et 72_{C,a} à 72_{C,d} pour le niveau 3), placés en amont du poste de préparation de commande (poste A, B ou C) du niveau concerné, et duaux chacun d'une des quatre sources PTS1 à PTS4. Chaque dispositif tampon destination est par exemple un convoyeur ou tout autre système d'accumulation ou de stockage.
- une pluralité de collecteurs intermédiaires (référencés 71_{A,a} à 71_{A,d} pour le niveau 1, 71_{B,a} à 71_{B,d} pour le niveau 2 et 71_{C,a} à 71_{C,d} pour le niveau 3) (composés chacun par exemple d'un ou plusieurs convoyeurs), placés chacun en amont d'un des dispositifs tampons destination.

Pour traiter simultanément plusieurs commandes, le système de pilotage effectue un premier ordonnancement : pour une commande donnée (listant des charges devant être extraites des sources et fournies dans un ordre donné à une destination donnée), il commande chacune des sources PTS1 à PTS4 pour que les charges de cette commande qui y sont stockées en sortent conformément à l'ordre donné, et sur le niveau où se trouve la destination donnée. Ceci se fait donc sans s'occuper de l'ordre de placement dans la commande et donc sans contraintes de synchronisation entre les sorties des sources PTS1 à PTS4.

Le choix du bon niveau constitue un aiguillage, équivalent à la première phase du second ordonnancement dans les modes de réalisation décrits plus haut. Puis le système de pilotage effectue une seconde phase du second ordonnancement : pour la commande donnée, il commande la pluralité de collecteurs intermédiaires et la pluralité de dispositifs tampons destination du niveau où se trouve la destination donnée, pour que les charges parviennent, selon l'ordre donné, au poste de préparation de commande situé à ce niveau.

Dans une variante de cette seconde phase, le système de pilotage fournit, via une interface homme-machine (non représentée), à un opérateur situé au poste de préparation de commande des informations pour que cet opérateur prenne, suivant l'ordre de la commande, les charges listées dans la commande et qui se présentent dans les dispositifs tampons destinations situés devant lui.

On présente maintenant, en relation avec la **figure 8**, une technique de traitement d'une commande par un système de pilotage, dans un système de distribution automatisé selon un quatrième mode de réalisation de l'invention.

Dans cet exemple, le système de distribution comprend :
- deux sources (référencées source 1 et source 2) ;
- immédiatement en aval de chaque source, un dispositif tampon source 81 et 82, de type FIFO ;
- un premier tronçon 83 de collecteur principal (système de transport commun), recevant les charges sortant des dispositifs tampons sources 81 et 82 ;
- deux pluralités de dispositifs tampons intermédiaire, de type FIFO, placés en parallèle et en aval du premier tronçon 83 de collecteur principal. La première pluralité comprend deux dispositifs tampons intermédiaires 84a et 84b, duaux chacun d'une des deux sources et utilisés pour trier les charges de chaque commande destinée à la première destination (cible 1). La deuxième pluralité comprend deux dispositifs tampons intermédiaires 85a et 85b, duaux chacun d'une des deux sources et utilisés pour trier les charges de chaque commande destinée à la deuxième destination (cible 2) ;
- un second tronçon de collecteur principal, placé en aval de la pluralité de dispositifs tampons destination ;
- immédiatement en amont de chaque destination, un dispositif tampon destination, de type FIFO ;
- deux destinations (référencées cible 1 et cible 2).

Dans l'exemple illustré sur la figure 8, on suppose que les deux commandes suivantes doivent être traitées simultanément (une commande pour chaque destination) :
- une première commande listant cinq charges notées (dans l'ordre de la première commande) : 1B, 2B, 3B, 4B et 5B. Elle est destinée à la première destination (cible 1) ; et
- une seconde commande listant cinq charges notées (dans l'ordre de la première commande) : 1A, 2A, 3A, 4A et 5A Elle est destinée à la deuxième destination (cible 2).

On a représenté sur la figure 8 les charges de ces deux commandes à trois instants différents.

A un premier instant, suite à un premier ordonnancement, les charges sont sorties des sources et se trouvent dans les dispositifs tampons sources 81 et 82. Plus précisément, suite au premier ordonnancement effectué par le système de pilotage, les charges ont été sorties des sources en fonction de l'ordre de chaque commande (en revanche, il n'y a pas encore d'ordonnancement entre commandes). Ainsi, le dispositif tampon source 81 a reçu successivement les charges 3B, 1A, 3A, 4B et 5A (3B et 4B sont dans l'ordre de la seconde commande, et 1A, 3A et 5A sont dans l'ordre de la première commande). Le dispositif tampon source 82 a reçu successivement les charges 1B, 2A, 4A, 2B et 5B (1B, 2B et 5B sont dans l'ordre de la seconde commande, et 1A, 3A et 5A sont dans l'ordre de la seconde commande).

A un deuxième instant, suite à une première phase d'un second ordonnancement, chacune des charges (sortant d'une source donnée et devant être dirigée vers une destination donnée) a été aiguillée vers le dispositif tampon intermédiaire associé à la destination donnée et dual de la source donnée. Ainsi, pour la première commande, le dispositif tampon intermédiaire 84a a reçu successivement les charges 1B, 2B et 5B, et le dispositif tampon intermédiaire 84b a reçu successivement les charges 3B et 4B. Pour la deuxième commande, le dispositif tampon intermédiaire 85a a reçu successivement les charges 2A et 4A, et le dispositif tampon intermédiaire 85b a reçu successivement les charges 1A, 3A et 5A.

A un troisième instant, suite à une seconde phase du second ordonnancement, les charges ont été, pour chaque commande, placées sur le second tronçon 86 de collecteur principal en fonction de l'ordre de cette commande. Puis, en sortie du second tronçon 86 de collecteur principal, les charges ont été aiguillées vers la destination adéquate. Ainsi, pour la première commande, le dispositif tampon destination 87 a reçu successivement les charges 1B, 2B, 3B, 4B et 5B. Pour la deuxième commande, le dispositif tampon destination 88 a reçu successivement les charges 1A, 2A, 3A, 4A et 5A.

Dans une mise en oeuvre particulière, le système de pilotage est adapté pour effectuer une affectation dynamique des dispositifs tampons intermédiaires 84a, 84b, 85a et 85b parmi les destinations, en fonction de la ou les destinations effectivement utilisée(s). Par exemple, si la première destination (cible 1) n'est pas utilisée, tous les dispositifs tampons intermédiaires 84a, 84b, 85a et 85b sont utilisés pour la deuxième destination (cible 2), ce qui permet par exemple de traiter simultanément deux commandes destinées à cette deuxième destination.

On présente maintenant, en relation avec la **figure 9**, une technique de traitement d'une commande par un système de pilotage, dans un système de distribution automatisé selon un cinquième mode de réalisation de l'invention.

Ce cinquième mode de réalisation se différencie du quatrième (illustré sur la figure 8) en ce que le système de distribution automatisé comprend non pas deux mais quatre pluralités de dispositifs tampons intermédiaire, de type FIFO, placés en parallèle et en aval du premier tronçon 83 de collecteur principal :
- la première pluralité comprend deux dispositifs tampons intermédiaires 94a et 94b, duaux chacun d'une des deux sources et utilisés pour trier les charges d'une première commande destinée à la première destination (cible 1) ;
- la deuxième pluralité comprend deux dispositifs tampons intermédiaires 95a et 95b, duaux chacun d'une des deux sources et utilisés pour trier les charges d'une seconde commande destinée à la première destination (cible 1) ;
- la troisième pluralité comprend deux dispositifs tampons intermédiaires 96a et 96b, duaux chacun d'une des deux sources et utilisés pour trier les charges d'une troisième commande destinée à la seconde destination (cible 2) ;
- la quatrième pluralité comprend deux dispositifs tampons intermédiaires 97a et 97b, duaux chacun d'une des deux sources et utilisés pour trier les charges d'une quatrième commande destinée à la seconde destination (cible 2).

Dans l'exemple illustré sur la figure 9, on suppose que les quatre commandes suivantes doivent être traitées simultanément (deux commandes pour chaque destination) :
- une première commande listant cinq charges notées (dans l'ordre de la première commande) : 1B, 2B, 3B, 4B et 5B. Elle est destinée à la première destination (cible 1) ;
- une deuxième commande listant cinq charges notées (dans l'ordre de la deuxième commande): 1D, 2D, 3D, 4D et 5D. Elle est destinée à la première destination (cible 1) ;
- une troisième commande listant cinq charges notées (dans l'ordre de la troisième commande) : 1A, 2A, 3A, 4A et 5A Elle est destinée à la deuxième destination (cible 2) ;
- une quatrième commande listant cinq charges notées (dans l'ordre de la troisième commande) : 1C, 2C, 3C, 4C et 5C Elle est destinée à la deuxième destination (cible 2).

On a représenté sur la figure 9 les charges de ces quatre commandes à trois instants différents.

A un premier instant, suite à un premier ordonnancement, les charges sont sorties des sources et se trouvent dans les dispositifs tampons sources 81 et 82. Plus précisément, suite au premier ordonnancement effectué par le système de pilotage, les charges ont été sorties des sources en fonction de l'ordre de chaque commande (en revanche, il n'y a pas encore d'ordonnancement entre commandes). Ainsi, le dispositif tampon source 81 a reçu successivement les charges 3B, 1C, 1A, 2D, 3A, 4D, 4B, 2C et 5A. Le dispositif tampon source 82 a reçu successivement les charges 1B, 3C, 2A, 1D, 4A, 3D, 2B, 4C, 5B et 5D.

A un deuxième instant, suite à une première phase d'un second ordonnancement, chacune des charges (sortant d'une source donnée et devant être dirigée vers une destination donnée) a été aiguillée vers l'un des deux dispositifs tampons intermédiaires qui sont chacun associé à la destination donnée et dual de la source donnée (le choix parmi les deux se fait en fonction de la commande). Ainsi, pour la première commande, le dispositif tampon intermédiaire 94a a reçu successivement les charges 1B, 2B et 5B, et le dispositif tampon intermédiaire 94b a reçu successivement les charges 3B et 4B. Pour la deuxième commande, le dispositif tampon intermédiaire 95a a reçu successivement les charges 1D, 3D et 5D, et le dispositif tampon intermédiaire 95b a reçu successivement les charges 2D et 4D. Pour la troisième commande, le dispositif tampon intermédiaire 97a a reçu successivement les charges 2A et 4A, et le dispositif tampon intermédiaire 97b a reçu successivement les charges 1A, 3A et 5A. Pour la quatrième commande, le dispositif tampon intermédiaire 96a a reçu successivement les charges 3C, 4C et 5C, et le dispositif tampon intermédiaire 96b a reçu successivement les charges 1C et 2C.

A un troisième instant, suite à une seconde phase du second ordonnancement, les charges ont été, pour chaque commande, placées sur le second tronçon 86 de collecteur principal en fonction de l'ordre de cette commande, et en fonction d'un ordre entre commandes. Puis, en sortie du second tronçon 86 de collecteur principal, les charges ont été aiguillées vers la destination adéquate. Ainsi, le dispositif tampon destination 87 a reçu successivement les charges 1B, 2B, 3B, 4B et 5B de la première commande, puis les charges 1D, 2D, 3D, 4D et 5D de la deuxième commande. Le dispositif tampon destination 88 a reçu successivement les charges 1A, 2A, 3A, 4A et 5A de la troisième commande, puis les charges 1C, 2C, 3C, 4C et 5C de la quatrième commande.

Dans une mise en oeuvre particulière, le système de pilotage est adapté pour effectuer une affectation dynamique des dispositifs tampons intermédiaires 94a, 94b, 95a, 95b, 96a, 96b, 97a et 97b parmi les destinations, en fonction de la ou les destinations effectivement utilisée(s). Ceci permet par exemple de traiter simultanément trois commandes pour la première destination, et une seule pour la deuxième destination.

Outre les modes de réalisation décrits ci-dessus, de nombreux autres modes de réalisation de la technique de traitement d'une commande selon l'invention peuvent être envisagés sans sortir du cadre de la présente invention telle que définie par les revendications. On peut notamment prévoir d'autres types de sources.

## Revendications

1. Système de distribution automatisé comprenant des sources (PTS1 à PTS4) stockant des charges, au moins une destination (26, 26') recevant des charges et un système de pilotage (50) adapté pour traiter des commandes, comprenant :
- un premier système de transport commun (25 ; 83) pour le transport des charges sortant des sources ;
- en aval du premier système de transport commun, et en amont de et associée à chaque destination, au moins une pluralité de premiers dispositifs tampons de type FIFO (27a à 27d, 27a' à 27d'), duaux chacun d'une des sources, et dans lequel, pour traiter une commande donnée listant des charges devant être extraites des sources et fournies dans un ordre donné à une destination donnée, le système de pilotage est adapté pour :
- effectuer un premier ordonnancement (61), en commandant chaque source pour que les charges de la commande donnée stockées dans ladite source sortent de ladite source conformément à l'ordre donné ;
- effectuer un second ordonnancement (62) :
* en aiguillant (62a) chacune des charges de la commande donnée, sortant du premier système de transport commun en provenance d'une source donnée, vers le premier dispositif tampon associé à la destination donnée et dual de la source donnée ; et
* en commandant (62b) la pluralité de premiers dispositifs tampons associés à la destination donnée pour que les charges listées dans la commande donnée sortent vers la destination donnée en fonction de l'ordre donné, ou en fournissant, via une interface homme-machine, à un opérateur situé à la destination donnée des informations pour prendre, en fonction de l'ordre donné, les charges listées dans la commande donnée, dans les premiers dispositifs tampons associés à la destination donnée.

2. Système de distribution automatisé selon la revendication 1, **caractérisé en ce qu'**il comprend, associés à au moins une même destination donnée, au moins deux pluralités de premiers dispositifs tampons, de type FIFO et duaux chacun d'une des sources, et **en ce que**, pour traiter simultanément au moins deux commandes listant des charges devant être fournies à ladite même destination donnée, chaque pluralité de premiers dispositifs tampons est utilisée, dans le cadre du second ordonnancement, pour le traitement d'une commande distincte parmi lesdites au moins deux commandes.

3. Système de distribution automatisé selon l'une quelconque des revendications 1 et 2, **caractérisé en ce qu'**il comprend :
- un second dispositif tampon de type FIFO (21 à 24) placé immédiatement en aval de chaque source et en amont du premier système de transport commun ; et/ou
- un troisième dispositif tampon de type FIFO (87, 88) placé immédiatement en amont de chaque destination et en aval du premier système de transport commun.

4. Système de distribution automatisé selon l'une quelconque des revendications 1 à 3, **caractérisé en ce qu'**il comprend au moins deux destinations associées chacune à au moins une pluralité de premiers dispositifs tampons, et **en ce que** ledit premier système de transport commun transporte les charges entre les sources et les pluralités de premiers dispositifs tampons associées aux destinations.

5. Système de distribution automatisé selon la revendication 4, **caractérisé en ce que** le système de pilotage est adapté pour, sur détection d'une place libre dans l'un des premiers dispositifs tampons (27a à 27d, 27a' à 27d') associés à une destination donnée, déclencher un ordre de sortie, afin qu'une charge, destinée audit premier dispositif tampon, sorte de la source dont ledit premier dispositif tampon est dual, ou sorte d'un dispositif tampon de type FIFO placé immédiatement en aval de la source dont ledit premier dispositif tampon est dual, la charge sortie étant prise en charge par ledit premier système de transport commun.

6. Système de distribution automatisé selon la revendication 5, **caractérisé en ce que**, au moins pour un premier dispositif tampon donné, le système de pilotage est adapté pour délivrer un nombre d'ordres de sortie supérieur au nombre de places libres dans ledit dispositif tampon donné.

7. Système de distribution automatisé selon l'une quelconque des revendications 1 à 6, **caractérisé en ce qu'**il comprend au moins deux destinations associées chacune à au moins une pluralité de premiers dispositifs tampons, et **en ce qu'**il comprend un deuxième système de transport commun (86) pour le transport de charges entre les destinations et les pluralités de premiers dispositifs tampons associées aux destinations.

8. Système de distribution automatisé selon la revendication 7, **caractérisé en ce que** le système de pilotage est adapté pour effectuer une affectation dynamique des premiers dispositifs tampons parmi les destinations, en fonction de la ou les destinations effectivement utilisée(s).

9. Procédé de traitement d'une commande par un système de pilotage d'un système de distribution automatisé, ledit système de distribution automatisé comprenant des sources stockant des charges, un premier système de transport commun (25 ; 83) pour le transport de charges sortant des sources, et au moins une destination recevant des charges,
ledit procédé comprenant
les étapes suivantes, pour traiter une commande donnée listant des charges devant être extraites des sources et fournies dans un ordre donné à une destination donnée :
- le système de pilotage effectue un premier ordonnancement (61), en commandant chaque source pour que les charges de la commande donnée stockées dans ladite source sortent de ladite source conformément à l'ordre donné ;
- le système de pilotage effectue un second ordonnancement (62) :
* en aiguillant (62a) chacune des charges de la commande donnée, sortant du premier système de transport commun en provenance d'une source donnée, vers un dispositif tampon associé à la destination donnée et dual de la source donnée, une pluralité de dispositifs tampons de type FIFO étant associés à et situés en amont de chaque destination et duaux chacun d'une des sources, ladite pluralité de dispositifs tampons de type FIFO étant situés en aval du premier système de transport commun ; et
* en commandant (62b) la pluralité de dispositifs tampons associés à la destination donnée pour que les charges listées dans la commande donnée sortent vers la destination donnée en fonction de l'ordre donné, ou en fournissant, via une interface homme-machine, à un opérateur situé à la destination donnée des informations pour prendre, en fonction de l'ordre donné, les charges listées dans la commande donnée, dans les dispositifs tampons associés à la destination donnée.

10. Utilisation d'un produit programme d'ordinateur dans un système selon l'une quelconque des revendications 1 à 8, ledit produit programme d'ordinateur comprenant des instructions de code de programme pour la mise en oeuvre du procédé selon la revendication 9, lorsque ledit programme est exécuté sur un ordinateur.

11. Utilisation d'un médium de stockage dans un système selon l'une quelconque des revendications 1 à 8, ledit médium de stockage étant lisible par ordinateur et non transitoire, et stockant un programme d'ordinateur comprenant un jeu d'instructions exécutables par un ordinateur ou un processeur pour mettre en oeuvre le procédé selon la revendication 9.

## Patentansprüche

1. Automatisiertes Verteilungssystem, umfassend Quellen (PTS1 bis PTS4), die Ladungen speichern, mindestens einen Bestimmungsort (26, 26'), der die Ladungen empfängt, und ein Steuerungssystem (50), das geeignet ist, die Anträge zu verarbeiten,
umfassend:
- ein erstes gemeinsames Transportsystem (25; 83) für den Transport der Ladungen, die aus den Quellen herauskommen;
- dem ersten gemeinsamen Transportsystem nachgelagert und jedem Bestimmungsort vorgelagert und mit jedem Bestimmungsort verbunden, mindestens mehrere erste Puffervorrichtungen vom FIFO-Typ (27a bis 27d, 27a' bis 27d'), die jeweils von einer der Quellen dual sind,
wobei, um einen vorgegebenen Antrag zu verarbeiten, der die Ladungen auflistet, die aus den Quellen entnommen und in einer vorgegebenen Reihenfolge an einen vorgegebenen Bestimmungsort geliefert werden müssen, das Steuerungssystem geeignet ist, um:
- eine erste Koordination (61) durchzuführen, indem jede Quelle gesteuert wird, damit die Ladungen des vorgegebenen Antrags, die in der Quelle gespeichert sind, aus der Quelle gemäß der vorgegebenen Reihenfolge herauskommen;
- eine zweite Koordination (62) durchzuführen:
indem jede der Ladungen des vorgegebenen Antrags, die von dem ersten gemeinsamen Transportsystem aus einer vorgegebenen Quelle herauskommt, auf die erste Puffervorrichtung gelenkt wird (62a), die mit dem vorgegebenen Bestimmungsort verbunden und von der vorgegebenen Quelle dual ist, und
indem die mehreren ersten Puffervorrichtungen, die mit dem vorgegebenen Bestimmungsort verbunden sind, gesteuert werden (62b), damit die Ladungen, die in dem vorgegebenen Antrag aufgelistet sind, zu dem vorgegebenen Bestimmungsort in Abhängigkeit von der vorgegebenen Reihenfolge herauskommen, oder indem über eine Mensch-Maschine-Schnittstelle einer Bedienperson, die sich an dem vorgegebenen Bestimmungsort befindet, Informationen bereitgestellt werden, um in Abhängigkeit von der vorgegebenen Reihenfolge die Ladungen, die in dem vorgegebenen Antrag aufgelistet sind, aus den ersten Puffervorrichtungen, die mit dem vorgegebenen Bestimmungsort verbunden sind, zu entnehmen.

2. Automatisiertes Verteilungssystem nach Anspruch 1, **dadurch gekennzeichnet, dass** es mindestens zwei mehrere erste Puffervorrichtungen, die mit mindestens einem gleichen vorgegebenen Bestimmungsort verbunden sind, aufweist, die vom FIFO-Typ sind und jeweils von einer der Quellen dual sind, und dass, um mindestens zwei Anträge, die die Lasten auflisten, die an den gleichen vorgegebenen Bestimmungsort geliefert werden müssen, gleichzeitig zu verarbeiten, alle mehreren ersten Puffervorrichtungen im Rahmen der zweiten Koordination für die Verarbeitung eines separaten Antrags unter den mindestens zwei Anträgen verwendet werden.

3. Automatisiertes Verteilungssystem nach einem der Ansprüche 1 und 2, **dadurch gekennzeichnet, dass** es Folgendes aufweist:
- eine zweite Puffervorrichtung vom FIFO-Typ (21 bis 24), die jeder Quelle direkt nachgelagert und dem ersten gemeinsamen Transportsystem vorgelagert angeordnet ist; und/oder
- eine dritte Puffervorrichtung vom FIFO-Typ (87, 88), die jedem Bestimmungsort direkt vorgelagert und dem ersten gemeinsamen Transportsystem nachgelagert angeordnet ist.

4. Automatisiertes Verteilungssystem nach einem der Ansprüche 1 bis 3, **dadurch gekennzeichnet, dass** es mindestens zwei Bestimmungsorte aufweist, die jeweils mit mindestens mehreren ersten Puffervorrichtungen verbunden sind, und dass das erste gemeinsame Transportsystem die Ladungen zwischen den Quellen und den mehreren ersten Puffervorrichtungen transportiert, die mit den Bestimmungsorten verbunden sind.

5. Automatisiertes Verteilungssystem nach Anspruch 4, **dadurch gekennzeichnet, dass** das Steuerungssystem geeignet ist, um bei Erkennung eines freien Platzes in einer der ersten Puffervorrichtungen (27a bis 27d, 27a' bis 27d'), die mit einem vorgegebenen Bestimmungsort verbunden sind, einen Ausgangsbefehl auszulösen, damit eine Ladung, die für die erste Puffervorrichtung bestimmt ist, aus der Quelle herauskommt, von der die erste Puffervorrichtung dual ist, oder aus einer Puffervorrichtung vom FIFO-Typ herauskommt, die der Quelle direkt nachgelagert angeordnet ist, von der die erste Puffervorrichtung dual ist, wobei die herausgekommene Ladung von dem ersten gemeinsamen Transportsystem übernommen wird.

6. Automatisiertes Verteilungssystem nach Anspruch 5, **dadurch gekennzeichnet, dass** das Steuerungssystem mindestens für eine erste bestimmte Puffervorrichtung geeignet ist, um eine Anzahl an Ausgangsbefehlen zu erteilen, die größer als die Anzahl an freien Plätzen in der vorgegebenen Puffervorrichtung ist.

7. Automatisiertes Verteilungssystem nach einem der Ansprüche 1 bis 6, **dadurch gekennzeichnet, dass** es mindestens zwei Bestimmungsorte aufweist, die jeweils mit mindestens mehreren ersten Puffervorrichtungen verbunden sind, und dass es ein zweites gemeinsames Transportsystem (86) für den Transport von Ladungen zwischen den Bestimmungsorten und den mehreren ersten Puffervorrichtungen, die mit den Bestimmungsorten verbunden sind, aufweist.

8. Automatisiertes Verteilungssystem nach Anspruch 7, **dadurch gekennzeichnet, dass** das Steuerungssystem geeignet ist, um eine dynamische Zuordnung der ersten Puffervorrichtungen unter den Bestimmungsorten in Abhängigkeit von dem oder den tatsächlich verwendeten Bestimmungsort(en) durchzuführen.

9. Verfahren zur Verarbeitung eines Antrags durch ein Steuerungssystem eines automatisierten Verteilungssystems, wobei das automatisierte Verteilungssystem Quellen, die Ladungen speichern, ein erstes gemeinsames Transportsystem (25; 83) für den Transport von Ladungen, die aus den Quellen herauskommen, und mindestens einen Bestimmungsort aufweist, der die Ladungen empfängt,
wobei das Verfahren die folgenden Schritte aufweist, um einen vorgegebenen Antrag zu verarbeiten, der die Ladungen auflistet, die aus den Quellen entnommen und in einer vorgegebenen Reihenfolge an einen vorgegebenen Bestimmungsort geliefert werden müssen:
- das Steuerungssystem führt eine erste Koordination (61) durch, indem jede Quelle gesteuert wird, damit die Ladungen des vorgegebenen Antrags, die in der Quelle gespeichert sind, aus der Quelle gemäß der vorgegebenen Reihenfolge herauskommen;
- das Steuerungssystem führt eine zweite Koordination (62) durch:
indem jede der Ladungen des vorgegebenen Antrags, die von dem ersten gemeinsamen Transportsystem aus einer vorgegebenen Quelle herauskommt, auf eine Puffervorrichtung gelenkt wird (62a), die mit dem vorgegebenen Bestimmungsort verbunden ist und von der vorgegebenen Quelle dual ist, wobei mehrere Puffervorrichtungen vom FIFO-Typ mit jedem Bestimmungsort verbunden und jedem Bestimmungsort vorgelagert angeordnet werden und jeweils von einer der Quellen dual sind, wobei die mehreren Puffervorrichtungen vom FIFO-Typ dem ersten gemeinsamen Transportsystem nachgelagert angeordnet werden; und
indem die mehreren Puffervorrichtungen, die mit dem vorgegebenen Bestimmungsort verbunden sind, gesteuert werden (62b), damit die Ladungen, die in dem vorgegebenen Antrag aufgelistet sind, zu dem vorgegebenen Bestimmungsort in Abhängigkeit von der vorgegebenen Reihenfolge herauskommen, oder indem über eine Mensch-Maschine-Schnittstelle einer Bedienperson, die sich an dem vorgegebenen Bestimmungsort befindet, Informationen bereitgestellt werden, um in Abhängigkeit von der vorgegebenen Reihenfolge die Ladungen, die in dem vorgegebenen Antrag aufgelistet sind, aus den Puffervorrichtungen, die mit dem vorgegebenen Bestimmungsort verbunden sind, zu entnehmen.

10. Verwendung eines Computerprogrammproduktes in einem System nach einem der Ansprüche 1 bis 8, wobei das Computerprogrammprodukt Programmcodebefehle für das Umsetzen des Verfahrens nach Anspruch 9 aufweist, wenn das Programm auf einem Computer ausgeführt wird.

11. Verwendung eines Speichermediums in einem System nach einem der Ansprüche 1 bis 8, wobei das Speichermedium computerlesbar und nicht transient ist und ein Computerprogramm speichert, das einen Satz Anweisungen aufweist, die durch einen Computer oder einen Prozessor ausgeführt werden können, um das Verfahren nach Anspruch 9 umzusetzen.

## Claims

1. System of automated distribution comprising sources (PTS1 to PTS4) storing loads, at least one destination (26, 26') receiving loads and a control system (50) adapted to processing customer orders,
comprising:
- a first common transportation system (25; 83) for the transportation of the loads exiting the sources;
- downstream from the first common transportation system and, upstream to each destination and associated with each destination, at least one plurality of first FIFO-type buffer devices (27a to 27d, 27a' to 27d'), each dual to one of the sources,
and wherein, to process a given customer order listing loads that have to be extracted from the sources and provided in a given sequential order to a given destination, the control system is adapted to:
- carrying out a first sequencing (61) by commanding each source so that the loads of the given customer order, stored in said source, exit said source in accordance with the given sequential order;
- carrying out a second sequencing (62):
* by routing (62a) each of the loads of the given customer order, exiting the first common transportation system coming from a given source, towards the first buffer device associated with the given destination and dual to the given source; and
* by commanding (62b) the plurality of first buffer devices associated with a given destination so that the loads listed in the given customer order exit towards the given destination according to the given sequential order, or by providing an operator situated at the given destination, via a man-machine interface, with information for taking, according to the given sequential order, the loads listed in the given customer order in the first buffer devices associated with a given destination

2. System of automated distribution according to claim 1, **characterized in that** it comprises, associated with at least one same given destination, at least two pluralities of FIFO-type first buffer devices, each dual to one of the sources, and **in that**, to simultaneously process at least two customer orders listing loads that have to be provided to a same given destination, each plurality of first buffer devices is used, in the context of the second sequencing, for the processing of a distinct customer order among said at least two customer orders.

3. System of automated distribution according to any one of the claims 1 and 2, **characterized in that** it comprises:
- a second FIFO-type buffer device (21 to 24) placed immediately downstream from each source and upstream to each common transportation system; and/or
- a third FIFO-type buffer device (87, 88) placed immediately upstream to each destination and downstream from the first common transportation system.

4. System of automated distribution according to any one of the claims 1 to 3, **characterized in that** it comprises at least two destinations, each associated with at least one plurality of first buffer devices, and **in that** said first common transportation system transports the loads between the sources and the pluralities of the first buffer devices associated with the destinations.

5. System of automated distribution according to claim 4, **characterized in that** the control system is adapted to activating, upon detection of an unoccupied place in one of the first buffer devices (27a to 27d, 27a' to 27d') associated with a given destination, an exit order so that a load, intended for said first buffer device, exits the source to which said first buffer device is dual or exits a FIFO-type buffer device placed immediately downstream to the source, to which said first buffer device is dual, the load that has exited being taken charge of by said first common transportation system.

6. System of automated distribution according to claim 5, **characterized in that**, at least for a first given buffer device, the control system is adapted to delivering a number of exit order greater than the number of unoccupied places in said given buffer device .

7. System of automated distribution according to any one of the claims 1 to 6, **characterized in that** it comprises at least two destinations each associated with at least one plurality of first buffer devices and it comprises a second common transportation system (86) for the transportation of loads between the destinations and the plurality of first buffer devices associated with the destination.

8. System of automated distribution according to claim 7, **characterized in that** the control system is adapted to carrying out a dynamic allocation of the first buffer devices among the destinations, as a function of the destination or destinations effectively used.

9. Method for processing a customer order by means of a control system for controlling a system of automated distribution, said system of automated distribution comprising sources storing loads, a first common transportation system (25; 83) for the transportation of loads exiting the sources and at least one destination receiving loads, said method comprising the following steps for processing a given customer order listing loads that have to be extracted from the sources and provided in a given sequential order to a given destination:
- the control system carries out a first sequencing (61), in commanding each source so that the loads of the given customer order stored in said source exit said source in compliance with the given sequential order;
- the control system carries out a second sequencing (62):
* by routing (62a) each of the loads of the given customer order exiting the first common transportation system coming from a given source, towards a buffer device associated with the given destination and dual to the given source, a plurality of FIFO-type buffer devices being associated with and being situated upstream to each destination and each being dual to one of the sources, said plurality of FIFO-type buffer devices being situated downstream from the first common transportation system; and
* by commanding (62b) the plurality of buffer devices associated with the given destination so that the loads listed in the given customer order exit towards the given destination according to the given sequential order, or by providing an operator situated at the given destination, via a man-machine interface, with the information for taking, according to the given sequential order, the loads listed in the given customer order in the buffer devices associated with the given destination.

10. Use of a computer program product in a system according to any one of the claims 1 to 8, said computer program product comprising program code instructions for implementing the method according to claim 9, when said program is executed on a computer.

11. Use of a computer-readable and non-transient storage medium in a system according to any one of the claims 1 to 8, said storage medium storing a computer program comprising a set of instructions executable by a computer to implement the method according to claim 9.
